# EUROPÄISCHE PATENTSCHRIFT

(11) **EP 1 772 063 B1**
(45) Veröffentlichungstag und Bekanntmachung des Hinweises auf die Patenterteilung: **12.10.2011**
(21) Anmeldenummer: 06013198.4
(22) Anmeldetag: 27.06.2006
(51) Int. Cl.: A23L 1/164, A23L 1/18, A23L 1/0534, A23L 1/00, A23L 1/314, A23L 1/315, A23L 1/317, A23L 1/325

(54) **Fleisch-, Fisch- oder Käseriegel**
Meat-, fish or cheesebar
Barre à la viande, au poisson ou au fromage

(30) Priorität: 06.10.2005 EP 05021791
(43) Veröffentlichungstag der Anmeldung: 11.04.2007
(73) Patentinhaber: Zimmermann, Reinhold, 58511 Lüdenscheid (DE); Bleser, Berndt Frank, 47803 Krefeld (DE)
(72) Erfinder: Zimmermann, Reinhold, 58511 Lüdenscheid (DE); Bleser, Berndt Frank, 47803 Krefeld (DE)
(74) Vertreter: Thiel, Christian

(56) Entgegenhaltungen:
- EP-A- 0 647 410
- DE-A1- 3 406 622
- DE-A1- 3 538 805
- US-A- 5 091 201
- US-A- 5 300 312
- US-A1- 2003 091 697
- US-A1- 2005 226 960
- DATABASE WPI Section Ch, Week 200319 Derwent Publications Ltd., London, GB; Class B04, AN 2003-184782 XP002373297 & CN 1 163 707 A (LIU X) 5. November 1997 (1997-11-05)

## Beschreibung

Die Erfindung betrifft einen Fleischriegel, welcher für den sofortigen Verzehr geeignet ist, sowie ein Verfahren zu seiner Herstellung.

Für den kleinen Hunger zwischendurch werden heutzutage industriell vorproduzierte Snackprodukte hergestellt. Derartige Produkte sind überall erhältlich; sie sind relativ lange lagerfähig und liegen in handlichen Formen abgepackt vor. Insbesondere sind Produkte aus dem Süßwarenbereich bekannt. Sie reichen von Schokoladen über Müsli-Riegel bis hin zu Mischprodukten, welche mit Obst und Getreide kombiniert sind. Des Weiteren sind auch Roh-, Brüh- und Kochwürste, abgepackt in Teigwaren bekannt. Dabei liegen beide Produkte getrennt voneinander oder werden von einem Teigmantel umhüllt, welche erst nach dem Aufbacken verzehrfähig sind.

Aufgrund der Veränderung der Essgewohnheiten der Verbraucher wird nach Produkten verlangt, die sowohl ausgewogen, nämlich den Verdauungstrakt nicht belasten, als auch hervorragende geschmackliche Eigenschaften aufweisen.

Aus dem Stand der Technik sind Müsli-Riegel bekannt, welche Cerealien enthalten, zumeist mit Fruchtsorten oder Schokolade kombiniert. Hierbei fehlt es gänzlich an tierischen Proteinen.

Bei den Kombinationen von Würsten in Teigwaren ist es in der Regel erforderlich, diese zu erwärmen. Derartige Produkte werden als halbfeuchte Produkte vermarktet, die in Kühltheken gelagert werden. Für den Verzehr werden sie im Toaster oder in der Mikrowelle erhitzt.

Aus DE 3 538 805 sind herzhafte Riegel am Stiel bekannt, welche als tierisches Protein Schweinespeck oder Schmelzkäse enthalten.

US 5 091 201 offenbart Lebensmittel in Form von Riegeln mit Trockenfisch. Aus US 5 300 312 sind weiterhin RTE-Lebensmittel bekannt in Form von Riegeln mit einer Rindfleisch-Komponente.

Aufgabe der Erfindung ist es daher, ein Produkt bereitzustellen, das sowohl pflanzliche als auch tierische Proteine enthält und zudem für den sofortigen Verzehr geeignet ist.

Zur Lösung dieser Aufgabe wird ein Riegel der eingangs genannten Art bereitgestellt, welcher aus Cerealien, Trockenfleisch, Trockenfisch und/oder daraus hergestellte Produkten, Trockenkäse, einem Bindesystem und Geschmacksgebenden Stoffen erhältlich ist.

Bei den Cerealien handelt es sich um Getreidepops, Getreideflocken, Getreideflakes und Getreidecrispies, wobei diese als Grundteig dienen. Besonders bevorzugt werden Dinkelflakes, Dinkelflocken und Dinkelpops. Als Trockenfleisch kommen alle Fleisch- und Fischsorten und daraus hergestellte Produkte in Frage, als Trockenkäse vorzugsweise naturgereifter Käse mit einem aw-Wert von maximal 0,65. Um eine Vermeidung von Ranzigkeit des Riegels zu gewährleisten, wird das Produkt unter Schutzgasatmosphäre abgepackt.

Der aw-Wert ist die Wasseraktivität der Trockenkomponenten, welche definiert wird durch aw = W/P0, wobei P den Wasserdampfpartialdruck im Lebensmittel bei der Temperatur T bedeutet und P0 den Sättigungsdampfdruck des reinen Wassers bei der gegebenen Temperatur ist. Lebensmittel mit einem aw-Wert < 0,8 sind im Allgemeinen über längere Zeiträume ohne zusätzliche Konservierungsmaßnahmen lagerfähig. Entsprechend können die erfindungsgemäßen Riegel ohne Zusatz von klassischen Konservierungsmitteln und ohne besondere Kühlung aufbewahrt werden. Die Haltbarkeit unter Umgebungsbedingungen ist für ein Produkt, das u. a. als Reiseproviant und Pausenmahlzeit und dergleichen konzipiert ist, eine essentielle Eigenschaft.

Die Produkte werden im Gefrier- oder Vakuum-Trocknungsverfahren hergestellt.

Es können verschiedene Fleischfertigprodukte, wie Salami oder Kochschinken, eingesetzt werden.

Um die Fleisch- und Käsebeläge mit den Cerealien in Kombination mit verschiedenen Gewürzen zu verbinden, ist ein Bindesystem aus Wasser, Pflanzenfett, Glycerin, Lecithin und Zuckerkomponenten entwickelt worden. Unter Fleischbeläge werden Fleisch-, Fischprodukte verschiedenster Sorten und Käsesorten verstanden.

Bevorzugt werden thermoreversible Methylcellulose und/oder Zuckerstoffe mit langkettigen Molekularstrukturen verwandt, welche die Fähigkeit besitzen, das Trockenfleisch und die Gewürze mit den Cerealien zu verbinden. Zellulosederivat ist ein einzigartiges funktionelles Hydrokolloid, das sich sehr gut in Wasser auflöst und beim Erhitzen geliert. Dank dieser multifunktionellen Eigenschaften und einer großen Viskositätsbandbreite bindet es Lebensmittelzubereitungen miteinander.

Auch andere Kohlenwasserstoffverbindungen sind vorstellbar; sie müssen lediglich eine begrenzte Süßkraft aufweisen, um den herzhaften Geschmack des Fleisch-, Käse- bzw. Fischbelags nicht zu beeinträchtigen. Bevorzugt werden Oligofructose, Maltosesirup, Glucosesirup, Maltodextrin, Melasse, Trehalose.

Oligofructose hat des Weiteren den Vorteil, als prebiotischer Wirkstoff zu fungieren. Eine Anreicherung mit prebiotischen Ballaststoffen ist vorstellbar.

Für die Geschmeidigkeit des Riegels werden Glycerin, Lecithin und pflanzliche Fette eingesetzt. Dadurch werden Geschmacks- und Mundempfindung deutlich verbessert. Der Riegel weist eine besondere Saftigkeit und Frische auf.

Um die lange Haltbarkeit des erfindungsgemäßen Riegels zu gewährleisten, werden auch andere Zutaten wie Kräuter, Früchte und Oliven in getrockneter Form eingesetzt. Des Weiteren wird geröstete Sesamsaat zwischen 2 bis 5 Gew.-% eingesetzt.

Eine weitere Variante des erfindungsgemäßen Riegels ist die Herstellung einer Zwischenschicht aus Fleischfarce.

Für verschiedene Geschmacksrichtungen werden Soja, Hefeextrakte, Sellerie oder ähnliches eingesetzt. Es können auch natürliche und/oder naturidentische Raucharomen, Bratenaromen, Grill-, Brathähnchen- und Käsearomen verwandt werden, die die Typik der eingesetzten Fleisch-, Fisch- und Käseprodukte unterstreichen bzw. verstärken.

Aufgrund der verschiedenen Zutaten ist es möglich, den Riegel variantenreich zu gestalten. Die Palette reicht von Fleisch, etwa Schwein, Rind, Geflügel oder Wild, bis hin zu Fisch und Produkten aus diesen Rohstoffen sowie Käse jeweils in getrockneter Form. Geschmacksrichtungen sind unbegrenzt. Vorstellbar sind z. B. indisch, mexikanisch, mediterran o. ä.

Die Fertigprodukte sind in Form von Riegeln mit aufliegenden oder auch eingemischten Trockenfleisch-/-fisch-Komponenten. Die Riegel können darüber hinaus auch eine konvexe Oberflächenausformung besitzen.

Vorzugsweise ist der erfindungsgemäße Riegel erhältlich aus

| | |
|---|---|
| 30 - 50 Gew.-% | Cerealien |
| 25 - 40 Gew.-% | Zuckerstoffe (hochmolekular) |
| 5 - 10 Gew.-% | Trockenfleisch- oder -fischprodukte und/oder Trockenkäse |
| 2 - 8 Gew.-% | Gewürze/Kräuter |
| 3 - 7 Gew.-% | Pflanzenfett |
| 2 - 5 Gew.-% | Glycerin |
| 0,1 - 0,5 Gew.-% | Lecithin |
| 1 - 2 Gew.-% | Wasser |
| 1 - 2 Gew.-% | Salz |
| 0 - 10 Gew.-% | Früchte, Käse und/oder Gemüse |
| 0,2 - 1,5 Gew.-% | Aromen (natürlich und/oder naturidentisch) |

Eine weitere Erfindung ist das Verfahren zur Herstellung des erfindungsgemäßen Riegels.

Voraussetzung für die Herstellung ist zunächst die Zubereitung der Fleisch- oder Fisch-Komponente und/oder Zubereitungen daraus und die anschließende Gefrier- oder Vakuumtrocknung.

Wasser, Pflanzenfett, Glycerin, Lecithin und Zuckerkomponenten werden auf 100° - 130°C erhitzt und auf eine bindefähige Konsistenz eingedampft. Dieses so entstandene Bindesystem wird mit den Cerealien und sonstigen Zutaten gemischt, auf ein Laufband aufgetragen und über Walzensysteme mit einem Druck von bis zu 3 bar verdichtet.

Die Fleisch- bzw. Fischkomponente wird zu Beginn des Prozesses unter die Cerealien gemischt und/oder während des Verdichtungsprozesses auf die Oberfläche gebracht, wobei durch Anpressen ein Verbund mit Cerealien und Bindesystem hergestellt wird. Anschließend erfolgt eine Kühlung, das Schneiden und evtl. eine Ausformung des Produktes.

Bei Einsatz einer Fleischfarce erfolgt dieser Vorgang in drei aufeinander folgenden Arbeitsschritten.

Nachstehend werden anhand von Rezepturbeispielen einige erfindungsgemäße Fleischriegel näher erläutert:

| | |
|---|---|
| Tabelle 1 | Rezepturen für erfindungsgemäße Salami-Riegel |
| Tabelle 2 | Rezepturen für erfindungsgemäße Hähnchen-Riegel |
| Tabelle 3 | Rezepturen für erfindungsgemäße Schinken-Riegel |

Aus den Rezepturbeispielen ist ersichtlich, dass zahlreiche Variationen möglich sind.

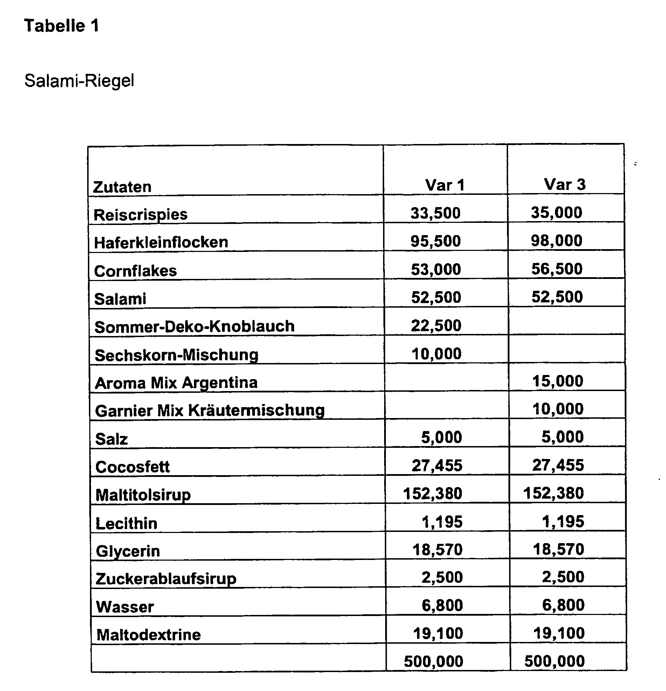

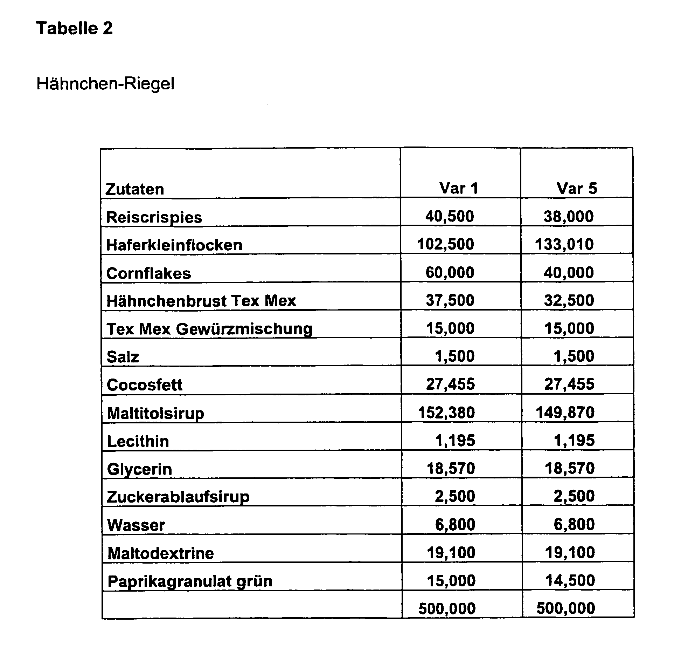

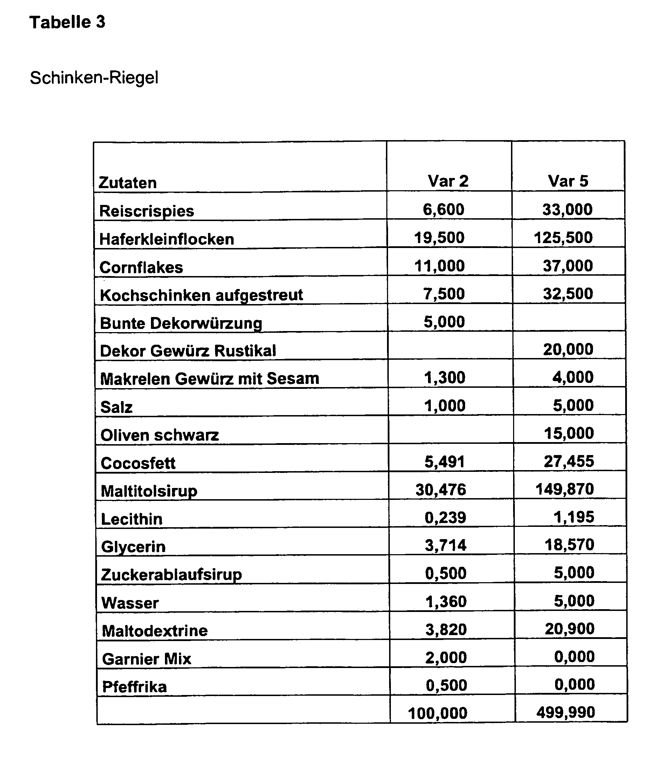

## Patentansprüche

1. Riegel für den sofortigen Verzehr geeignet, erhältlich aus
- Cerealien,
- Trockenfleisch, Trockenfisch sowie daraus hergestellten Produkten und/oder Trockenkäse,
- einem Bindesystem, wobei dieses aus Wasser, Pflanzenfett, Glyzerin, Lecithin und Zuckerkomponenten besteht, bei denen es sich um essig- und thermoreversible Methylzellulose, Zuckerstoffe oder langkettige Kohlenwasserstoffe, insbesondere Trehalose mit geringer Süßkraft handelt und
- geschmacksgebenden Stoffen,
wobei das Trockenfleisch, der Trockenfisch oder die daraus hergestellten Produkte oder der Trockenkäse einen a_{w}-Wert von maximal 0,65 aufweisen.

2. Riegel nach Anspruch 1, **dadurch gekennzeichnet, dass** es sich bei den Cerealien um Getreidepops, Getreideflocken, Getreideflakes und/oder Getreidecrispies handelt.

3. Riegel nach Anspruch 1, **dadurch gekennzeichnet, dass** eine zusätzliche Zwischenschicht aus Fleischfarce verwendet wird.

4. Riegel nach Anspruch 1, **dadurch gekennzeichnet, dass** der Riegel folgende Zusammensetzung aufweist:
| | |
|---|---|
| 30 - 50 Gew.-% | Cerealien |
| 25 - 40 Gew.-% | Zuckerstoffe (hochmolekular) |
| 5-10 Gew.-% | Trockenfleisch- oder -fischprodukte und/oder Trockenkäse |
| 2-8 Gew.-% | Gewürze/Kräuter |
| 3 - 7 Gew.-% | Pflanzenfett |
| 2-5 Gew.-% | Glycerin |
| 1-2 Gew.-% | Wasser |
| 0,1 - 0,5 Gew.-% | Lecithin |
| 0-10 Gew.-% | Früchte, Käse und/oder Gemüse |
| 1 - 2 Gew.-% | Salz |
| 0,2 - 1,5 Gew.-% | Aromen (natürlich und/oder naturidentisch) |

5. Verfahren zur Herstellung eines Riegels mit folgenden Arbeitsschritten:
- Bildung eines Bindesystems aus Wasser, Pflanzenfett, Glycerin, Lecithin und Zuckerkomponenten,
- Bildung einer Cerealienmischung durch Mischen von Cerealien mit einer Belagkombination aus Trockenfleisch, -fisch, Produkten daraus und/oder Trockenkäse, Gewürzen sowie ggf. Geschmacksstoffen, und
- Zusammenbringen der Cerealienmischung mit dem Bindesystem in einem Verdichtungsprozess.

6. Verfahren zur Herstellung eines Riegels mit folgenden Arbeitsschritten:
- Bildung eines Bindesystems aus Wasser, Pflanzenfett, Glycerin, Lecithin und Zuckerkomponenten,
- Zusammenbringen des Bindesystems mit Cerealien zu einer Cerealien-Bindesystem-Einheit und
- Aufbringen einer Belagkombination aus Trockenfleisch, Trockenfisch, Produkten daraus und/oder Trockenkäse, Gewürzen sowie ggf. Geschmacksstoffen auf die Oberfläche der Cerealien-Bindesystem-Einheit während eines Verdichtungsprozesses.

7. Verfahren nach Anspruch 5 oder 6, **dadurch gekennzeichnet, dass** das Bindesystem zunächst bei 100-130°C erhitzt und dann bis zur Konsistenzfähigkeit eingedampft wird.

8. Verfahren nach Anspruch 7, **dadurch gekennzeichnet, dass** mittels Walzpresse das Endprodukt geformt wird.

## Claims

1. A bar suitable for immediate consumption obtainable from
- cereals,
- dried meat, dried fish and products produced therefrom and/or dried cheese,
- a binding system, wherein this consists of water, vegetable fat, glycerine, lecithin and sugar components, which are vinegar and thermoreversible methylcellulose, sugar substances or long chain hydrocarbons, particularly trehalose of low sweetness and
- flavourings,
wherein the dried meat, the dried fish or the products produced therefrom or the dried cheese have an a_{w} value of at most 0.65.

2. A bar as claimed in claim 1, **characterised in that** the cereals are grain pops, grain flocs, grain flakes and/or grain crispies.

3. A bar as claimed in claim 1, **characterised in that** an additional intermediate layer of meat filling is used.

4. A bar as claimed in claim 1, **characterised in that** the bar has the following composition:
| | |
|---|---|
| 30 - 50 wt. % | Cereals |
| 25 - 40 wt. % | Sugar substances (high molecular) |
| 5 - 10 wt. % | Dried meat or fish products and/or dried cheese |
| 2 - 8 wt. % | Spices/Herbs |
| 3 - 7 wt. % | Vegetable fat |
| 2 - 5 wt. % | Glycerine |
| 1 - 2 wt. % | Water |
| 0.1 - 0.5 wt. % | Lecithin |
| 0 - 10 wt. % | Fruit, cheese and/or vegetable |
| 1 - 2 wt. % | Salt |
| 0.2 - 1.5 wt. % | Flavourings (natural and/or nature identical) |

5. A method of manufacturing a bar with the following working steps:
- forming a binding system from water, vegetable fat, glycerine, lecithin and sugar components,
- fonning a cereal mixture by mixing cereals with a coating composition of dried meat, dried fish, products thereof and/or dried cheese, spices and optionally flavourings, and
- bringing the cereal mixture together with the binding system in a compression process.

6. A method of manufacturing a bar with the following working steps:
- fonning a binding system from water, vegetable fat, glycerine, lecithin and sugar components,
- bringing the binding system together with cereals to form a cereal-binding system unit and
- applying a coating composition of dried meat, dried fish, products thereof and/or dried cheese, herbs and optionally flavourings to the surface of the cereal-binding system unit during the compression process.

7. A method as claimed in claim 5 or 6, **characterised in that** the binding system is firstly heated to 100-130°C and then steamed up to the ability of its consistency.

8. A method as claimed in claim 7, **characterised in that** the end product is shaped by means of a roller press.

## Revendications

1. Barre convenant pour une consommation immédiate, pouvant être obtenue à partir de :
- céréales,
- viande séchée, poisson séché ainsi que produits fabriqués à partir de ces derniers et/ou de fromage sec,
- un système de liaison, celui-ci étant composé d'eau, de matières grasses végétales, de glycérine, de lécithine et de composants à base de sucre, pour lesquels il s'agit de méthylcellulose réversible par du vinaigre et par de la chaleur, de sucres ou d'hydrocarbures à chaîne longue, en particulier du tréhalose à faible pouvoir édulcorant, et
- substances donnant du goût,
la viande séchée, le poisson séché ou les produits fabriqués à partir de ces derniers ou le fromage sec présentant une valeur a_{w} de tout au plus 0,65.

2. Barre selon la revendication 1, **caractérisée en ce qu'**il s'agit, pour les céréales, de céréales éclatées, de flocons de céréales, de miettes de céréales et/ou de flocons croquants de céréales.

3. Barre selon la revendication 1, **caractérisée en ce qu'**une couche intermédiaire additionnelle de farce de viande est utilisée.

4. Barre selon la revendication 1, **caractérisée en ce que** la barre présente la composition suivante :
30 - 50 % en poids de céréales,
25 - 40 % en poids de sucres (macromoléculaires),
5 - 10 % en poids de produits de viande séchée ou de poisson séché et/ou de fromage sec,
2 - 8 % en poids d' épices/herbes,
3 - 7 % en poids de matières grasses végétales,
2 - 5 % en poids de glycérine,
1 - 2 % en poids d'eau,
0,1 - 0,5 % en poids de lécithine,
0 - 10 % en poids de fruits, fromage et/ou légumes,
1 - 2 % en poids de sel,
0,2 - 1,5 % en poids d'arômes (naturels et/ou identiques aux naturels).

5. Procédé de fabrication d'une barre, consistant aux étapes de travail suivantes :
- former un système de liaison composé d'eau, de matières grasses végétales, de glycérine, de lécithine et de composants à base de sucre,
- former un mélange de céréales en mélangeant des céréales avec une combinaison d'enrobage de viande séchée, de poisson séché, de produits de ces derniers et/ou de fromage sec, d'épices, ainsi qu'éventuellement de substances donnant du goût, et
- assembler le mélange de céréales avec le système de liaison dans un processus de compactage.

6. Procédé de fabrication d'une barre, consistant aux étapes de travail suivantes :
- former un système de liaison composé d'eau, de matières grasses végétales, de glycérine, de lécithine et de composants à base de sucre,
- assembler le système de liaison avec les céréales, pour obtenir un ensemble de céréales et système de liaison, et
- appliquer une combinaison d'enrobage de viande séchée, de poisson séché, de produits de ces derniers et/ou de fromage sec, d'épices, ainsi qu'éventuellement de substances donnant du goût sur la surface de l'ensemble de céréales et système de liaison pendant un processus de compactage.

7. Procédé selon la revendication 5 ou 6, **caractérisé en ce que** le système de liaison est tout d'abord chauffé à une température comprise entre 100 et 130°C et ensuite concentré par évaporation jusqu'à son aptitude à la consistance.

8. Procédé selon la revendication 7, **caractérisé en ce que** le produit fini est façonné au moyen d'une presse de laminage.
